# EUROPÄISCHE PATENTSCHRIFT

(11) **EP 2 517 811 B1**
(45) Veröffentlichungstag und Bekanntmachung des Hinweises auf die Patenterteilung: **10.08.2016**
(21) Anmeldenummer: 12156634.3
(22) Anmeldetag: 23.02.2012
(51) Int. Cl.: B23B 31/12

(54) **Bohrvorrichtung**
Drilling device
Dispositif de forage

(30) Priorität: 29.04.2011 DE 102011002331
(43) Veröffentlichungstag der Anmeldung: 31.10.2012
(73) Patentinhaber: Röhm GmbH, 89567 Sontheim/Brenz (DE)
(72) Erfinder: Schenk, Peter, 89168 Niederstotzingen (DE)
(74) Vertreter: Hentrich Patentanwälte PartG mbB

(56) Entgegenhaltungen:
- EP-A2- 1 714 722
- FR-A1- 2 612 820
- US-A1- 2006 061 048
- US-A1- 2006 186 610

## Beschreibung

Die Erfindung betrifft eine Bohrvorrichtung gemäß dem Oberbegriff des unabhängigen Patentanspruchs 1. Eine solche Bohrvorrichtung ist aus der EP 1 714 722 A2 bekannt.

Ein Bohrfutter bei dem die Verstellung der Spannbacken mittels des Antriebs der Bohrmaschine erfolgt ist bereits aus der FR 2 612 820 A1 bekannt. Dieses ist verstellbar zwischen einer ersten Konfiguration, in der die Spannbacken beim Antrieb der Bohrmaschine geschlossen werden und einer zweiten Konfiguration, bei der beim Antrieb der Bohrmaschine die Spannbacken geöffnet werden. Es ist optimiert für Bohrmaschinen, die in einer Richtung umlaufen, wohingegen eine aufwändige Konstruktion geschaffen ist, sollte die Bohrmaschine in zwei Richtungen umlaufen können. Dabei ist nachteilhaft, dass beim Bohrvorgang erst eine Schraube in die Wandung des Futterkörpers eingedreht werden muss, um die Relativdrehung zwischen dem Gewindeglied und dem Gewindegegenglied zu unterbinden.

Eine Bohrvorrichtung ist aus der EP 1 714 722 A2 bekannt. Hierbei ist die Bohrspindel als Maschinenhohlspindel gebildet, welche in einer

Bohrkonfiguration antreibbar ist mittels einer formschlüssigen Verbindung mit einem durch den Motor der Bohrmaschine angetriebenen Planetenträger. In dieser Bohrkonfiguration nimmt die Bohrspindel das Bohrfutter und dieses das Gewindeglied mit. Auch das Gewindegegenglied wird durch den Planetenträger mitgenommen, wobei hierzu eine Rutschkupplung zwischen dem Planetenträger und der das Gewindegegenglied antreibenden Komponenten ausgebildet ist. Diese Rutschkupplung weist den Nachteil auf, dass beim Bohrvorgang bei Einleiten eines zu großen Drehmoments über das Bohrwerkzeug auf das Gewindeglied ein "Auslösen" der Rutschkupplung zur Folge hat und somit ein Spannkraftverlust auftritt. Im Spannvorgang steht dagegen die Maschinenhohlspindel fest gegenüber dem Maschinengehäuse und ist nicht mehr mit dem Antrieb des Motors verbunden. In der Spannkonfiguration wird die Kraft des Motors über die Rutschkupplung auf das Gewindegegenglied übertragen, was zu einer Relativdrehung des mit der Maschinenhohlspindel feststehenden Gewindegegenglied führt. Auch hier ist nachteilhaft, dass diese Rutschkupplung zu früh "auslöst" und das Bohrwerkzeug nicht ordnungsgemäß im Bohrfutter gespannt ist.

Eine weitere Bohrvorrichtung, welche zwischen einer Spannkonfiguration und einer Bohrkonfigurtion verstellbar ist, ist aus der DE 10 2009 026 075 A1 bekannt. Die hier gezeigte Bohrspindel ist als Maschinenhohlspindel gestaltet, welche permanent sowohl in der Spannkonfiguration, als auch in der Bohrkonfiguration durch den Motor der Bohrmaschine angetrieben ist. Zur Schaltung der Bohrvorrichtung zwischen der Spannkonfiguration und der Bohrkonfiguration ist eine axial verstellbare, in der Maschinenhohlspindel geführte Kupplungsstange vorgesehen, welche drehfest mit dem Gewindegegenglied verbunden ist. In der Bohrkonfiguration ist die Kupplungsstange drehfest mit der Maschinenhohlspindel verbunden, wohingegen in der der Verstellung der Spannbacken dienenden Spannkonfiguration die Kupplungstange von der Maschinenhohlspindel entkoppelt und drehfest mit dem Maschinengehäuse verbunden ist. Hierbei stehen die Kupplungsstange und das Gewindegegenglied bezüglich der Umdrehung der vom Motor angetriebenen Maschinenhohlspindel fest. Die Maschinenhohlspindel ist drehfest mit dem Futterkörper und dem Backenhalter verbunden, so dass durch die Umdrehung des Futterkörpers das Gewindeglied ein- bzw. ausspindelt und damit eine Verstellung der Spannbacken durch den Motor der Bohrmaschine realisiert ist. Dies ist eine Möglichkeit die Stellung der Spannbacken mit Hilfe des Antriebs für die Bohrmaschine zu bewirken. Dabei ist es für einen Benutzer der Bohrvorrichtung allerdings schwierig ein Bohrwerkzeug in die Bohrvorrichtung zwischen den Spannbacken einzusetzen, da sich beim Spannvorgang der an der Bohrvorrichtung außen liegende und vom Motor der Bohrmaschine angetriebene Futterkörper dreht.

Es ist daher die Aufgabe der Erfindung, eine Bohrvorrichtung bereitzustellen, die die vorstehend genannten Nachteile beseitigt und außerdem eine fortschreitende Integration des Bohrfutters mit der Bohrmaschine bietet.

Diese Aufgabe wird bei einer Bohrvorrichtung mit dem Merkmalsbestand des unabhängigen Patentanspruchs 1 gelöst. Mit der erfindungsgemäßen Bohrvorrichtung ist der Vorteil verbunden, dass diese leichter, einfacher und billiger hergestellt werden kann. Außerdem ist durch den kompakten Aufbau der Bohrvorrichtung gewährleistest, dass in der Bohrkonfiguration eine Relativdrehung des Gewindeglieds bezüglich des Gewindegegenglieds blockiert ist. Es ist somit bei der erfindungsgemäßen Bohrvorrichtung keine Verriegelungseinrichtung mehr notwendig, wie sie beispielsweise in der EP 0 017 748 B1 gezeigt ist, welche eine Relativdrehung des Futterkörpers bezüglich den die Spannbacken lösenden Komponenten verhindern soll. Weiterhin ist keine Spannkraftbegrenzung mehr notwendig, wie sie bei nachspannenden Bohrfuttern häufig vorgesehen sind. Die durch das Bohrwerkzeug auf das Bohrfutter entgegen der Bohrrichtung wirkenden Drehmomente bewirken dabei in der Bohrkonfiguration keine Relativbewegung des Gewindeglieds bezüglich des Gewindegegenglieds. Es kann keine Verspannung des Bohrwerkszeugs auftreten, die ein einfaches Lösen des Bohrfutters verhinderte.

Erfindungswesentlich ist es, dass zwischen dem Motor und der Antriebshülse ein Getriebe, nämlich ein Planetengetriebe vorgesehen ist. Hierdurch können größtmögliche Drehmomente auf die Bohrspindel und in der Bohrkonfiguration auch auf das Gewindegegenglied übertragen werden.

Dabei ist es nicht erfindungswesentlich, dass das Planetengetriebe ein durch den Motor antreibbares Sonnenrad aufweist, das mit mindestens einem auf einem mit der Antriebshülse verbundenen Planetenträger gelagerten Planetenrad im Eingriff steht, das seinerseits mit einem dem Maschinengehäuse zugeordneten Hohlrad zusammenwirkt. Dadurch ist es möglich, den Antrieb der Bohrmaschine direkt am Sonnenrad anzusetzen, wodurch der Planetenträger die Antriebshülse, durch das mindestens eine auf dem nicht umlaufenden Hohlrad abrollende Planetenrad, antreibt.

Es ist nicht erfindungswesentlich, dass das Gewindegegenglied zweiteilig aus einer Gewindehülse und einer mit dieser drehfest verbundenen, axial verstellbaren Kupplungsstange gebildet und in der als Maschinenhohlspindel gebildeten Bohrspindel geführt ist, wenn die Kupplungsstange ein Kupplungsstirnrad und die Maschinenhohlspindel ein Spindelstirnrad aufweisen, und wenn die Antriebshülse und gegebenenfalls das Getriebe axial verstellbar im Maschinengehäuse gelagert sind. Durch das

Spindelstirnrad und das Kupplungsstirnrad ist es sehr einfach, eine drehmomentübertragende Verbindung zwischen der Antriebshülse und der Maschinenhohlspindel bzw. der Kupplungsstange herzustellen.

Ferner ist es nicht erfindungswesentlich, dass die Antriebshülse eine Innenverzahnung aufweist und reversibel von einer Spannkonfiguration, in welcher das Kupplungsstirnrad im Eingriff mit der Innenverzahnung steht, in eine Bohrkonfiguration, in welcher das Kupplungsstirnrad und das Spindelstirnrad im Eingriff mit der Innenverzahnung stehen, überführbar ist. In der Spannkonfiguration steht außerdem das Spindelstirnrad im Eingriff mit dem Hohlrad, wodurch die Maschinenhohlspindel drehfest mit dem Maschinengehäuse und dem Futterkörper verbunden ist. Die relative Verdrehung der Kupplungsstange bezüglich der Maschinenhohlspindel ist gewährleistet. Die Bohrvorrichtung kann sehr einfach durch die axiale Verstellung der Antriebshülse zwischen der Spannkonfiguration und der Bohrkonfiguration hin- und hergeschaltet werden. Auch hier ist durch den Antrieb des Kupplungsstirnrads und des Spindelstirnrads mittels der Antriebshülse eine Relativdrehung des Gewindeglieds relativ zum Gewindegegenglied verhindert.

Eine alternative aber nicht von der Erfindung umfasste Ausführungsform ist dadurch gekennzeichnet, dass die Antriebshülse fest mit dem Kupplungsstirnrad verbunden und reversibel von einer Spannkonfiguration, in welcher ein an der Kupplungsstange vorgesehener Zahnkranz außer Eingriff mit dem Spindelzahnkranz der Maschinenhohlspindel steht, in eine Bohrkonfiguration, in welcher der Zahnkranz im Eingriff mit dem Spindelzahnkranz steht, überführbar ist. In der Spannkonfiguration steht dabei das Spindelstirnrad ebenfalls im Eingriff mit dem Hohlrad, womit die Drehung der Kupplungsstange relativ zur Maschinenhohlspindel gefördert ist.

Die axiale Verstellung der Antriebshülse stellt eine drehfeste Verbindung zwischen der Maschinenhohlspindel und der die Gewindehülse antreibenden Kupplungsstange her, wodurch ein einfaches Umschalten zwischen der Bohrkonfiguration und der Spannkonfiguration geschaffen ist.

Sinnvollerweise ist dem Maschinengehäuse eine die axiale Verstellung von Teilen des Getriebes bewirkende Stellhülse zugeordnet. Dadurch kann der Benutzer manuell oder auch elektrisch zwischen der Spannkonfiguration und der Bohrkonfiguration umschalten. Für eine manuelle Verstellung kann es dabei sinnvoll sein, eine Steuerkurve im Gehäuse vorzusehen. Auch ist es denkbar, eine mit einem Elektromagnet realisierte Schaltung zwischen den beiden Konfigurationsstellungen zu verwenden, wie sie in der DE 10 2009 026 075 A1 gezeigt ist.

Dabei hat es sich als besonders günstig erwiesen, wenn die Stellhülse mindestens ein mit dem Hohlrad wechselwirkendes Stellelement aufweist, wodurch das Planetengetriebe mittels der Stellhülse auf einfache Weise axial verstellbar ist.

Als bevorzugt hat sich gezeigt, dass dem Maschinengehäuse axial vorn liegend eine lösbar mit diesem verbundene Abdeckkappe zugeordnet ist, da hierdurch verhindert wird, dass Bohrstaub oder sonstige Verschmutzungen in empfindliche Bauteile, wie z.B. in das Getriebe der Bohrvorrichtung, gelangen.

Dabei ist es verteilhaft, wenn zwischen der Bohrspindel und dem Maschinengehäuse mindestens eine Lagerung vorgesehen ist, welche die Rundlaufgenauigkeit des Bohrfutters und damit der gesamten Bohrvorrichtung sicherstellen.

Es ist wesentlich für die Erfindung, dass der Futterkörper als eine Futterhülse gebildet ist und mindestens einen radial innenliegenden Futterzahnkranz aufweist, dass im Futterkörper axial verstellbar eine durch den Motor antreibbare Spindelstange geführt ist, die von einer Spannkonfiguration, in welcher mindestens ein Spindelstangenzahnkranz der Spindelstange in Eingriff mit mindestens einem Planetenrad und außer Eingriff mit dem Futterzahnkranz steht, in eine Bohrkonfiguration, in welcher der Spindelstangenzahnkranz im Eingriff mit dem Futterzahnkranz steht, überführbar ist und dass die Antriebshülse als ein mit dem mindestens einen Planetenrad im Eingriff stehenden Hohlrad gebildet ist. Hierbei wird nur ein Bauteil, nämlich die Spindelstange axial verstellt, um zwischen der Spannkonfiguration und der Bohrkonfiguration hin- und herzuschalten. Die Spindelstange dient dabei als Zentralrad, das das mindestens eine Planetenrad antreibt, das seinerseits die als ein Hohlrad gebildete Antriebshülse antreibt. Durch die Antriebshülse wird das Gewindegegenglied angetrieben, welches im Eingriff mit den an den Spannbacken vorgesehenen Gewindegliedern steht.

Dabei hat es sich als besonders günstig erwiesen, wenn zwischen der Futterhülse und der Spindelstange ein diese axial abstützendes Federelement angeordnet ist. Hierdurch wirkt permanent eine Rückstellkraft der Feder auf die Spindelstange, wodurch die Bohrvorrichtung in die Bohrkonfiguration gedrückt wird.

Von Vorteil ist außerdem, wenn der Spindelstange ein koaxial angeordneter Mitnehmerring zugeordnet ist. Dieser Mitnehmerring stellt eine zusätzliche Führung für die Spindelstange bereit. Im Spannbetrieb steht der Mitnehmerring drehfest mit der Futterhülse im Eingriff, womit diese festgehalten wird und die Relativdrehung der Futterhülse bezüglich der Spindelstange gefördert ist. Außerdem kann der Mitnehmerring eine Mitnehmeraußenverzahnung aufweisen, die im Bohrbetrieb mit einer am Maschinengehäuse ausgebildeten Gehäuseverzahnung im Eingriff steht.

Weiterhin hat es sich als günstig erwiesen, wenn dem Maschinengehäuse eine die axiale Verstellung der Spindelstange bewirkende Stellhülse zugeordnet ist, wobei auch hier eine mechanische, elektrische oder manuelle Verstellung möglich ist.

Letztlich hat es sich als bevorzugt erwiesen, wenn die Stellhülse mindestens ein mit dem Mitnehmerring wechselwirkendes Stellelement aufweist, da hierdurch eine geführte und sichere Verstellung der Spindelstange gewährleistet ist.

Weitere vorteilhafte Ausführungsformen sind in den von Patentanspruch 1 abhängigen Patentansprüchen enthalten.

Im folgenden wird die Erfindung an in der Zeichnung dargestellten Ausführungsbeispielen näher erläutert; es zeigen:
- Fig. 1: einen Längsschnitt einer nicht von der Erfindung umfassten Bohrvorrichtung in Spannkonfiguration,
- Fig. 2: die Bohrvorrichtung aus Figur 1 in Bohrkonfiguration,
- Fig. 3: den Schnitt III - III aus Figur 2,
- Fig. 4: einen Längsschnitt durch eine nicht von der Erfindung umfassten Bohrvorrichtung in Spannkonfiguration,
- Fig. 5: die Bohrvorrichtung aus Figur 4 in Bohrkonfiguration,
- Fig. 6: den Schnitt VI - VI aus Figur 5,
- Fig. 7: einen Längsschnitt einer weiteren erfindungsgemäßen Ausführungsform der Bohrvorrichtung in Spannkonfiguration,
- Fig. 8: die Bohrvorrichtung aus Figur 7 in Bohrkonfiguration,
- Fig. 9: den Schnitt IX - IX aus Figur 7,
- Fig. 10: den Schnitt X - X aus Figur 7,
- Fig. 11: den Schnitt XI - XI aus Figur 8,
- Fig. 12: den Schnitt 8B - 8B aus Figur 8, und
- Fig. 13: den Schnitt 8A-8A aus Figur 8.

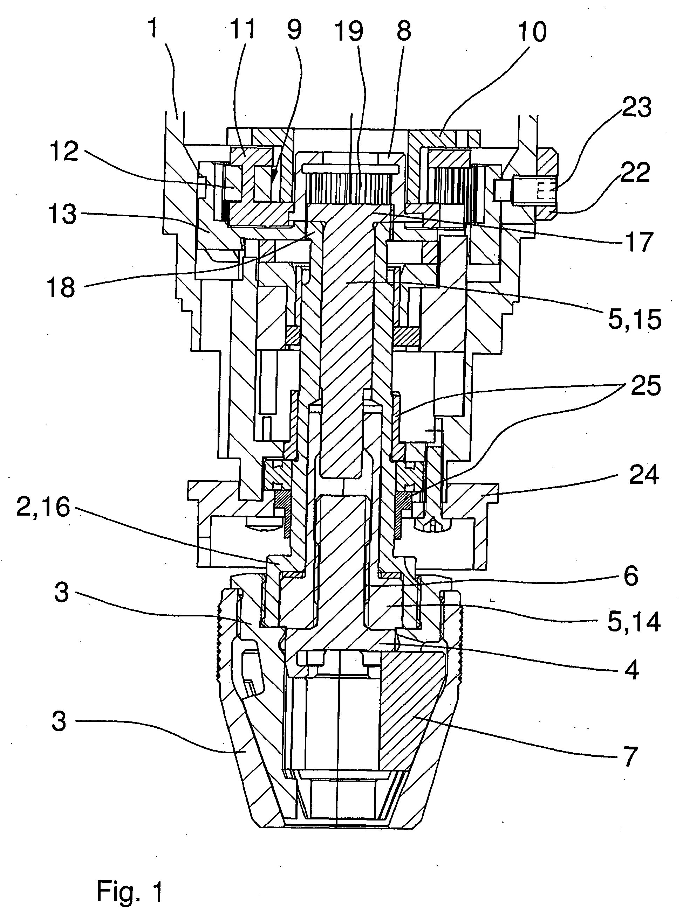

Figur 1 bis Figur 3 zeigen eine erste nicht von der Erfindung umfasste Bohrvorrichtung, bestehend aus einer einen Motor aufweisenden Bohrmaschine, die eine in einem Maschinengehäuse 1 drehbar gelagerte Bohrspindel 2 aufweist, und einem Bohrfutter mit einem Futterkörper 3, in dem mittels einer zwischen einem Gewindeglied 4 und einem Gewindegegenglied 5 ausgebildeten Gewindeverbindung 6 verstellbare Spannbacken 7 geführt sind. Bei der Bohrvorrichtung ist eine mit dem Gewindegegenglied 5 drehfest verbundende und mittels des Motors antreibbare Antriebshülse 8 vorgesehen.

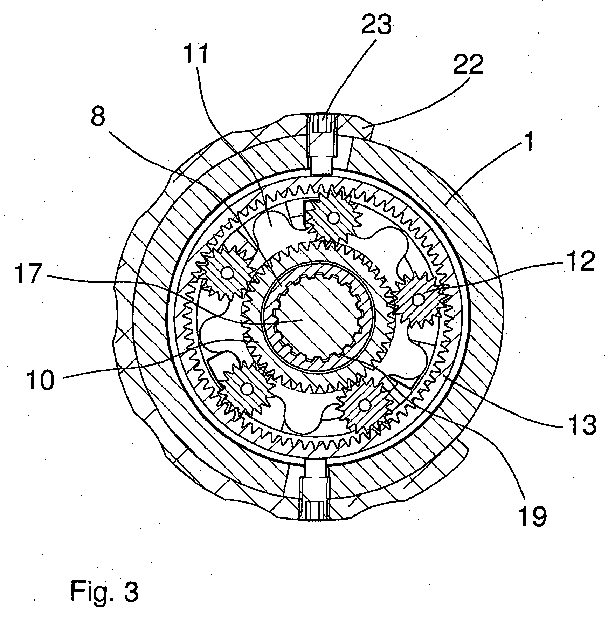

Außerdem ist zwischen dem Motor und der Antriebshülse 8 ein Planetengetriebe 9 angeordnet, welches ein durch den Motor antreibbares Sonnenrad 10 aufweist. Figur 3 zeigt, dass im bevorzugten Ausführungsspeispiel genau fünf Planetenräder 12 auf dem mit der Antriebshülse 8 verbundenen Planetenträger 11 gelagert sind, die mit dem Sonnenrad 10 und dem Hohlrad 13 im Eingriff stehen.

Das Gewindegegenglied 5 ist zweiteilig aus einer Gewindehülse 14 und einer mit dieser drehfest verbundenen, axial verstellbaren Kupplungsstange 15 gebildet und in der als Maschinenhohlspindel 16 gebildeten Bohrspindel 2 geführt. Die Kupplungsstange 15 weist ein Kupplungsstirnrad 17 und die Maschinenhohlspindel 16 ein Spindelstirnrad 18 auf. Das Planetengetriebe 9 und die Antriebshülse 8 sind axial verstellbar im Maschinengehäuse 1 gelagert, wobei eine dem Maschinengehäuse 1 zugeordnete Stellhülse 22 vorhanden ist, die die axiale Verstellung des Getriebes und der Antriebshülse 8 bewirkt. Hierzu weist die Stellhülse 22 ein mit dem Hohlrad 13 wechselwirkendes Stellelement 23 auf.

Axial vorn liegend, nämlich auf der dem Motor abgewandten Seite der Bohrvorrichtung, ist dem Maschinengehäuse 1 eine lösbar mit diesem verbundene Abdeckkappe 24 zugeordnet. Zwischen der Bohrspindel 2 und dem Maschinengehäuse 1 sind mehrere Lagerungen 25 vorgesehen.

In Figur 1 ist die Bohrvorrichtung in der Spannkonfiguration gezeigt, in der die Innenverzahnung 19 der Antriebshülse 8 im Eingriff mit dem Kupplungsstirnrad 17 steht und das Spindelstirnrad 18 mit dem nicht umlaufenden Hohlrad 13 verzahnt ist. Hier wird die Kraft des Motors, üblicherweise über eine Maschinenspindel, auf das Sonnenrad 10 des Planetengetriebes 9 übertragen. Dieses treibt die auf dem Planetenträger 11 gelagerten Planetenräder 12 an, welche auf dem drehfest mit dem Maschinengehäuse 1 verbundenen Hohlrad 13 abrollen. Die drehfest mit dem Planetenträger 11 verbundene Antriebshülse 8 überträgt die Kraft ihrerseits auf das Kupplungsstirnrad 17, wodurch die Kupplungsstange 15 und die Gewindehülse 14 angetrieben werden. Da das Spindelstirnrad 18 und damit die Maschinenhohlspindel 16 drehfest mit dem Maschinengehäuse 1 über das Hohlrad 13 verbunden ist, ist eine Relativdrehung der Gewindehülse 14 bezüglich der Maschinenhohlspindel 16 ermöglicht und das Gewindegegenglied 4 wird über die Gewindeverbindung 6 axial nach vorn, also in einer dem Motor abgewandten Richtung, bzw. axial nach hinten, unter der Mitnahme der Spannbacken 7 verstellt.

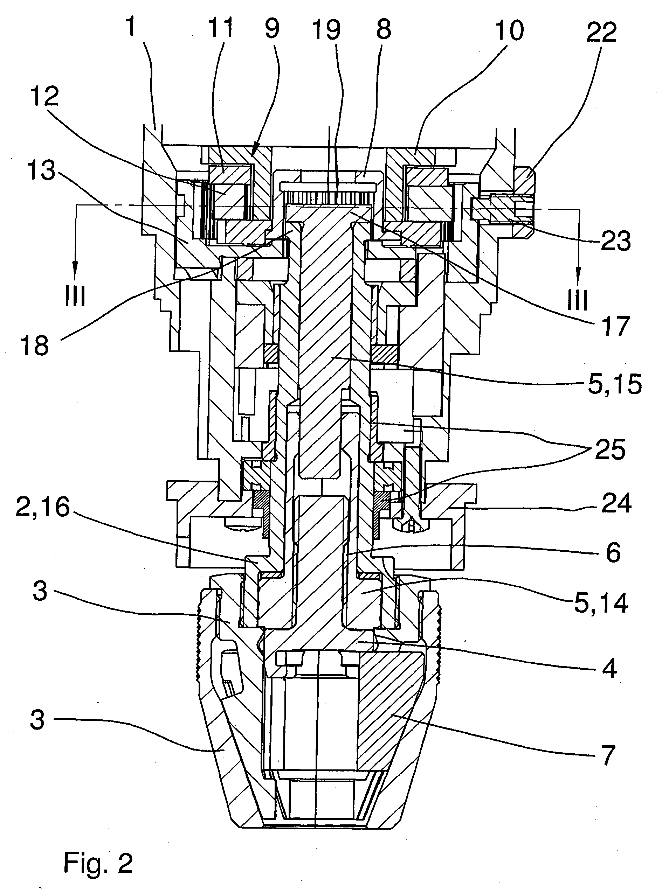

Figur 2 zeigt die Bohrvorrichtung in der Bohrkonfiguration, in der die Antriebshülse 8 und das Planetengetriebe 9 axial nach vorn verschoben sind, wobei das Kupplungsstirnrad 17 und das Spindelstirnrad 18 im Eingriff mit der Innenverzahnung 19 der Antriebshülse 8 stehen. Auch hier wird die Kraft des Motors auf das Sonnenrad 10 des Planetengetriebes 9 übertragen. Dieses treibt die auf dem Planetenträger 11 gelagerten Planetenräder 12 an, welche auf dem drehfest mit dem Maschinengehäuse 1 verbundenen Hohlrad 13 abrollen. Hier ist die Antriebshülse 8 durch die Verstellung der Stellhülse 22 axial nach vorn versetzt. Die Antriebshülse 8 wird vom Planetengetriebe 9 mitgenommen und ist nun drehfest mit der Kupplungsstange 15 und mit der Maschinenhohlspindel 16 über den Eingriff des Kupplungsstirnrads 17 und des Spindelstirnrads 18 mit der Innenverzahnung 19 der Antriebshülse 8 verbunden, womit die Kraft des Motors direkt auf die Kupplungsstange 15 und die Maschinenhohlspindel 16 übertragen wird. Somit ist eine Relativdrehung der Gewindehülse 14 bezüglich der Maschinenhohlspindel 16 und die Verstellung der Spannbacken 7 ist ausgeschlossen.

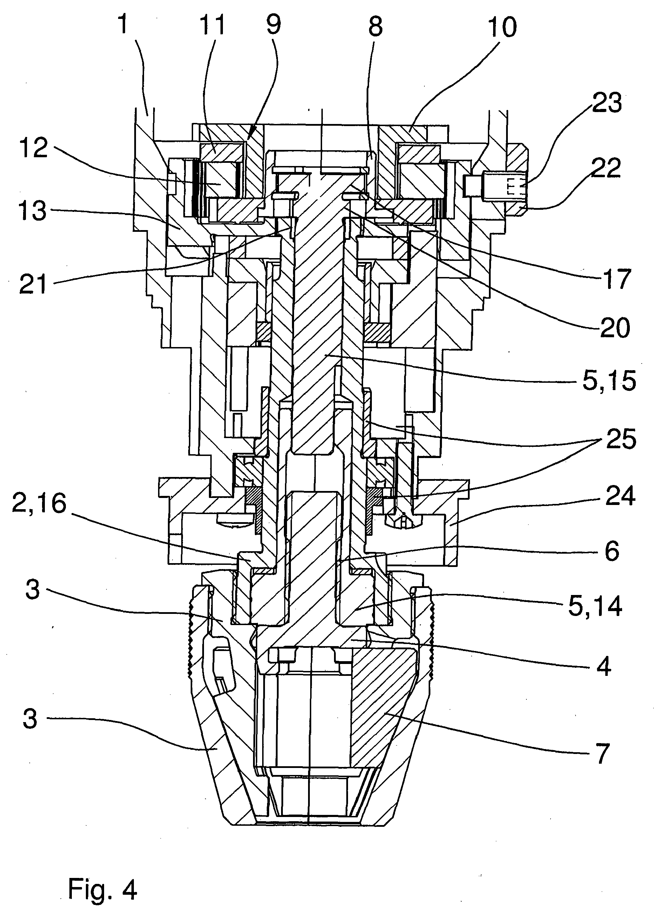

Eine weitere nicht von der Erfindung umfasste Bohrvorrichtung ist in Figur 4 bis Figur 6 gezeigt. Hierbei ist die Antriebshülse 8 fest mit dem Kupplungsstirnrad 17 verbunden und die Kupplungsstange 15 weist einen Zahnkranz 20 auf. Die Maschinenhohlspindel 16 weist ihrerseits einen Spindelzahnkranz 21 auf.

Figur 4 zeigt die Bohrvorrichtung in der Spannkonfiguration, in welcher der an der Kupplungsstange 15 vorgesehene Zahnkranz 20 außer Eingriff mit dem Spindelzahnkranz 21 der Maschinenhohlspindel 16 steht. Der Motor überträgt in dieser Ausführungsform die Kraft auf das Sonnenrad 10 des Planetengetriebes 9. Dieses treibt die auf dem Planetenträger 11 gelagerten Planetenräder 12 an, welche auf dem drehfest mit dem Maschinengehäuse 1 verbundenen Hohlrad 13 abrollen. Der Planetenträger 11 ist drehfest mit der Antriebshülse 8 und damit drehfest mit der Kupplungsstange 15 verbunden, welche somit durch den Motor angetrieben wird. Die Maschinenhohlspindel 16 ist formschlüssig mit dem drehfest mit dem Maschinengehäuse 1 verbundenen Hohlrad 13 verbunden. Die Stellhülse 22 ist axial nach hinten verstellt, so dass der Zahnkranz 20 der Kupplungsstange 15 nicht im Eingriff mit dem Spindelzahnkranz 21 steht. Somit wird nur die Kupplungsstange 15, nicht aber die Maschinenhohlspindel 16 durch den Motor angetrieben. Es ist in dieser Spannkonfiguration eine Relativdrehung zwischen der Maschinenhohlspindel 15 und der Gewindehülse 14 möglich, so dass auch bei dieser Bohrvorrichtung die Spannbacken 7 durch die axiale Verstellung des Gewindeglieds 4 verstellt werden.

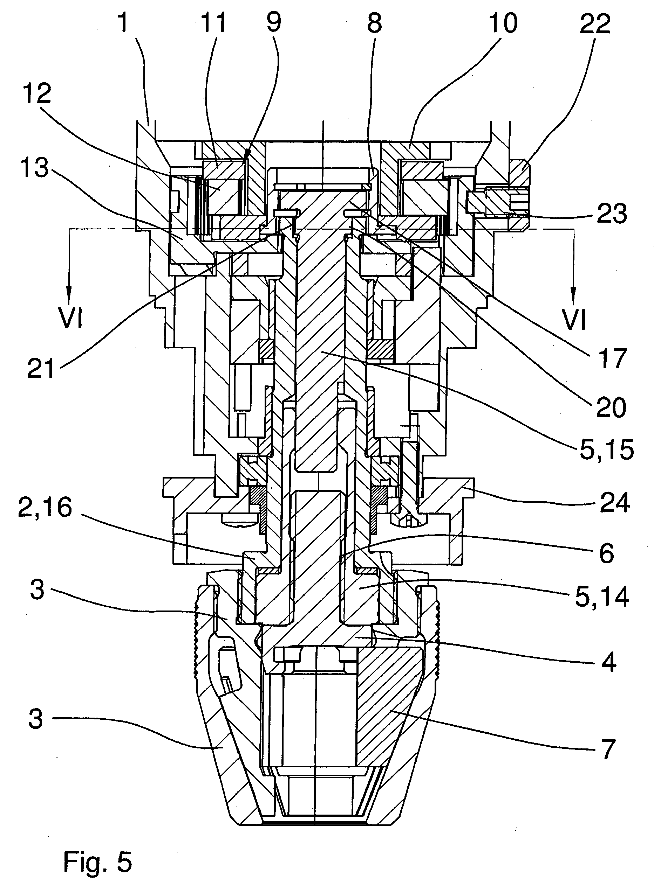

Dagegen ist in Figur 5 die Bohrvorrichtung in Bohrkonfiguration gezeigt, wobei der Zahnkranz 20 im Eingriff mit dem Spindelzahnkranz 21 steht. Der Motor überträgt in dieser Konfiguration die Kraft auf das Sonnenrad 10 des Planetengetriebes 9. Dieses treibt die auf dem Planetenträger 11 gelagerten Planetenräder 12 an, welche auf dem drehfest mit dem Maschinengehäuse 1 verbundenen Hohlrad 13 abrollen. Nun ist die Stellhülse 22 axial nach vorn verstellt, wodurch ebenfalls das Planetengetriebe 9 und die Antriebshülse 8 mit der Kupplungsstange 15 axial nach vorn versetzt sind und wobei der Formschluss zwischen dem Hohlrad 13 und der Maschinenhohlspindel 16 gelöst ist. Der Zahnkranz 20 der Kupplungsstange 15 ist in dieser Bohrkonfiguration im Eingriff mit dem Spindelzahnkranz 21, wodurch die Kraft des Motors auf die Kupplungsstange 15 und die Maschinenhohlspindel 16 übertragen wird. Eine Relativdrehung zwischen der Maschinenhohlspindel 16 und der Gewindehülse 14 ist ausgeschlossen.

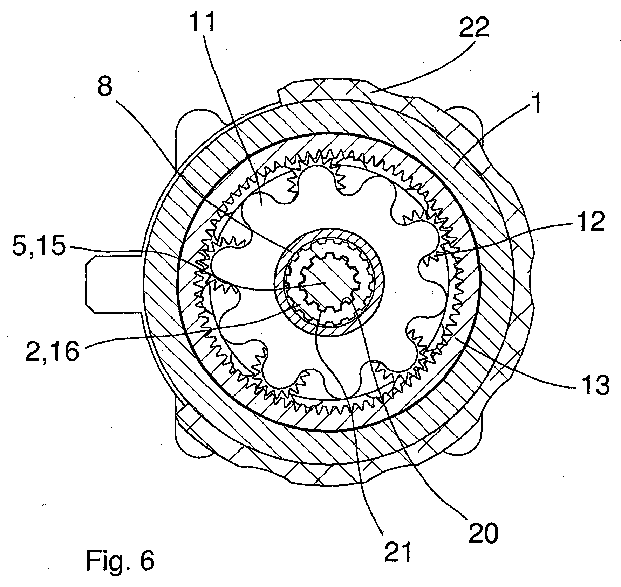

In Figur 6, dem Schnitt VI - VI aus Figur 5, ist zu erkennen, dass die Antriebshülse 8 auch bei dieser Bohrvorrichtung eine Innenverzahnung 19 aufweist. Außerdem wird ersichtlich, dass die Stellhülse 22 die Bohrvorrichtung nicht vollumfänglich umgeben muss.

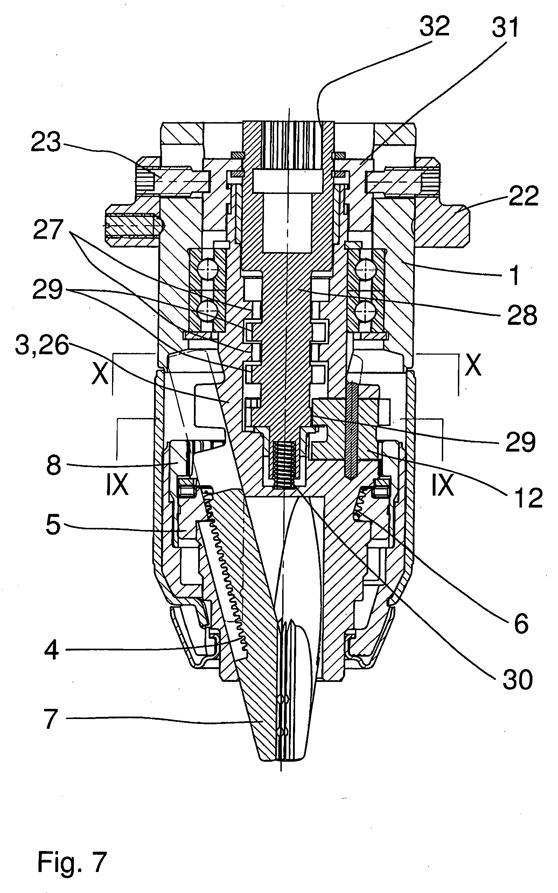

In den Figuren 7 bis Figur 11 ist eine erfindungsgemäße Ausführungsform einer Bohrvorrichtung dargestellt, wobei hier der Futterkörper 3 als Futterhülse 26 gebildet ist und zwei radial innen liegende Futterzahnkränze 27 aufweist. Im Futterkörper 3 ist axial verstellbar eine durch den Motor antreibbare Spindelstange 28 geführt, welche im Ausführungsbeispiel eine Aufnahme 32 für ein Antriebswerkzeug aufweist. Die Antriebshülse 8 ist in dieser Ausführungsform als ein mit den Planetenrädern 12 im Eingriff stehendes Hohlrad 13 gebildet.

Figur 7 zeigt die Bohrvorrichtung in der Spannkonfiguration, in welcher ein Spindelstangenzahnkranz 29 der Spindelstange 28 im Eingriff mit einem Planetenrad 12 und außer Eingriff mit dem Futterzahnkranz 27 steht. Zwischen der Futterhülse 26 und der Spindelstange 28 ist ein die Spindelstange 28 abstützendes Federelement 30 angeordnet, das die Bohrvorrichtung in die Bohrkonfiguration drückt. Koaxial zur Spindelstange 28 ist ein Mitnehmerring 31 angeordnet, der zur Verstellung der Spindelstange 28 mit einem einer Stellhülse 22 zugeordneten Stellelement 23 wechselwirkt. Üblicherweise ist zwischen dem Gehäuse 1 und dem Stellelement 23 und / oder der Stellhülse 22 eine Steuerkurve ausgebildet, so dass auf einfache Weise eine manuelle Verstellung der Spindelstange 28 ermöglicht ist. Die Kraft des Motors wird in dieser Ausführungsform direkt auf die Spindelstange 28 übertragen, die ihrerseits die auf dem Hohlrad 13 abrollenden Planetenräder 12 antreibt. Die Planetenräder 12 sind im Futterkörper 3 festgelegt, so dass durch deren Antreiben, das Hohlrad 13 umläuft. Das hier gezeigte Hohlrad 13 ist drehfest mit dem Gewindegegenglied 5 verbunden. Die Spindelzahnkränze 29 sind außer Eingriff mit den Futterzahnkränzen 27, so dass eine Relativdrehung der Spindelstange 28 bezüglich des drehfest stehenden Futterkörpers 3 ermöglicht ist. Damit wird in dieser Spannkonfiguration durch den Motor das Gewindegegenglied 5 angetrieben, über die drehfeste Verbindung mit dem Hohlrad 13 und den das Hohlrad 13 antreibenden Planetenrädern 12. Hierdurch können die Spannbacken 7 im feststehenden Futterkörper 3 verstellt werden.

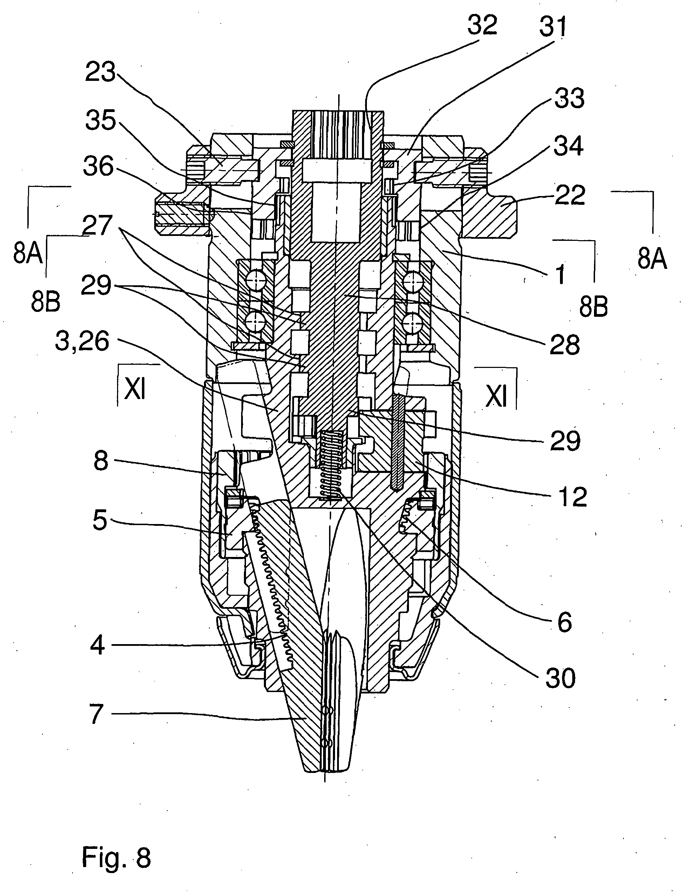

In Figur 8 ist die Bohrvorrichtung aus Figur 7 in der Bohrkonfiguration gezeigt, wobei der hier zweifach vorgesehene Spindelstangenzahnkranz 29 im Eingriff mit den Futterzahnkränzen 27 steht. Weiterhin ist entsprechend den vorgenannten Ausführungsformen eine Lagerung 25 zwischen dem Maschinengehäuse 1 und der Futterhülse 26 vorgesehen. Die Spindelstange 28 wird durch die Stellhülse 22 axial nach hinten verstellt, wodurch die Kraft des Motors-über die Spindelstange 28 auf den Futterkörper 3 durch den Eingriff der Futterzahnkränze 27 mit den Spindelstangenzahnkränzen 29 übertragen wird. Im gezeigten Ausführungsbeispiel ist die Spindelstange 28 außerdem formschlüssig mit den Planetenrädern 12 verbunden, die in dieser Bohrkonfiguration aber ihrerseits aber nicht mehr auf dem Hohlrad 13 abrollen, da das Hohlrad 13 und die Planetenräder 12 mit der Drehung des Futterkörpers 3 mitgenommen werden. Eine Relativdrehung des Futterkörpers 3 bezüglich des die Verstellung der Spannbacken 7 bewirkenden Gewindegegenglieds 5 ist ausgeschlossen.

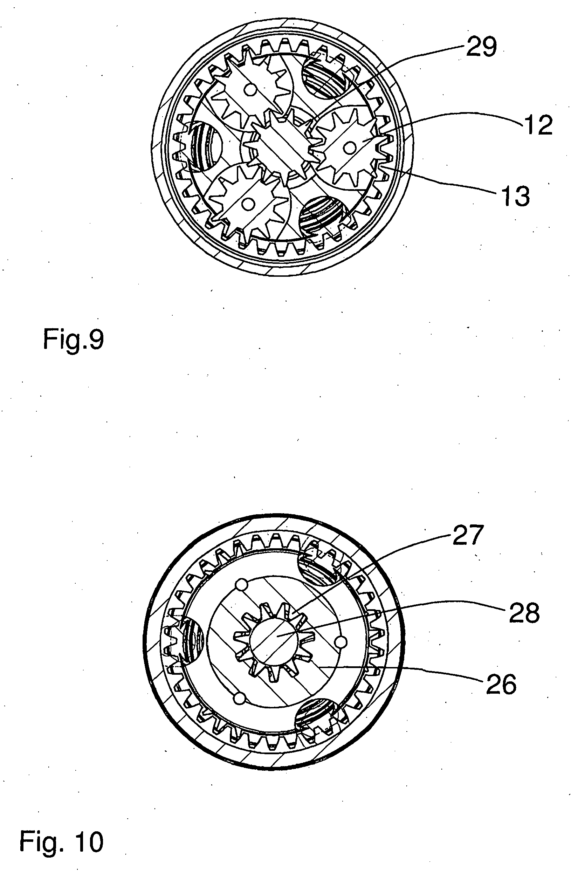

In Figur 9, dem Schnitt IX - IX aus Figur 7, ist zu erkennen, dass der Spindelstangenzahnkranz 29 als Sonnenrad 10 im Eingriff mit einem Planetenrad 12 steht, das seinerseits im Eingriff mit der als Hohlrad 13 gebildeten Antriebshülse 8 steht.

In Figur 10, dem Schnitt X - X aus Figur 7, ist gezeigt, dass kein Teil der Spindelstange 28 im Eingriff mit dem hier gezeigten Futterzahnkranz 27 steht, so dass sich die Spindelstange 28 relativ zur Futterhülse 26 verdrehen lässt.

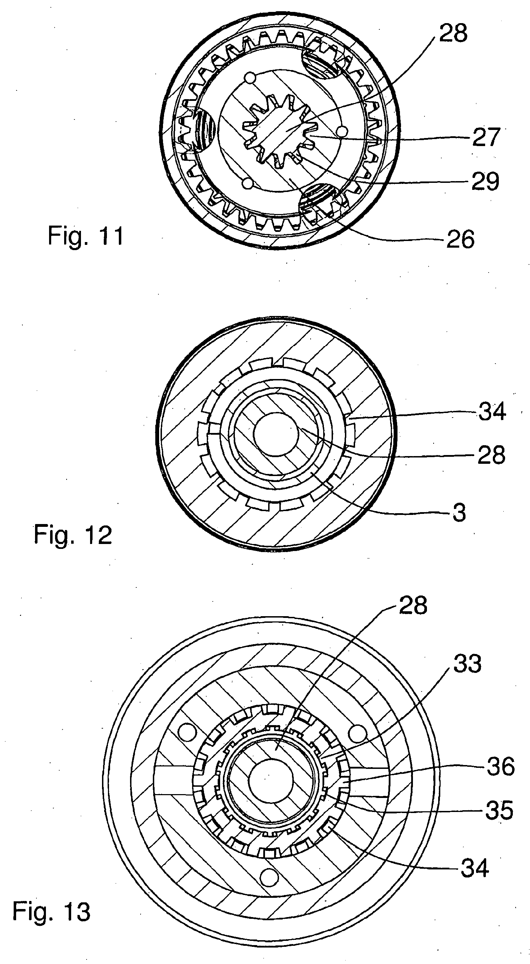

In Figur 11, dem Schnitt XI - XI ist deutlich zu erkennen, dass der Spindelstangenzahnkranz 29 im Eingriff mit dem Futterzahnkranz 27 steht und damit die Futterhülse 26 in der Bohrkonfiguration beim Umlaufen der Spindelstange 28 mitgeführt wird.

Figur 12, dem Schnitt 8A - 8A aus Figur 8, und Figur 13, dem Schnitt 8B-8B aus Figur 8, ist zu entnehmen, dass der Mitnehmerring 31 des gezeigten Ausführungsbeispiels eine Mitnehmerinnerverzahnung 33 und eine Mitnehmeraußenverzahnung 36 aufweist. Außerdem ist am Maschinengehäuse 1 eine Gehäuseverzahnung 34 ausgebildet. In der Bohrkonfiguration greift die Mitnehmerinnenverzahnung 33 in eine Futterkörperverzahnung 35 und die Mitnehmeraußenverzahnung 36 in die Gehäuseverzahnung 34 ein. Hierdurch wird der als Futterhülse 26 gebildete Futterkörper 3 festgehalten. Neben Verzahnungen sind auch andere drehfeste Verbindungen zwischen den vorgenannten Komponenten denkbar.

### Bezugszeichenliste

- 1: Maschinengehäuse
- 2: Bohrspindel
- 3: Futterkörper
- 4: Gewindeglied
- 5: Gewindegegenglied
- 6: Gewindeverbindung
- 7: Spannbacken
- 8: Antriebshülse
- 9: Planetengetriebe
- 10: Sonnenrad
- 11: Planetenträger
- 12: Planetenrad
- 13: Hohlrad
- 14: Gewindehülse
- 15: Kupplungsstange
- 16: Maschinenhohlspindel
- 17: Kupplungsstirnrad
- 18: Spindelstirnrad
- 19: Innenverzahnung
- 20: Zahnkranz
- 21: Spindelzahnkranz
- 22: Stellhülse
- 23: Stellelement
- 24: Abdeckkappe
- 25: Lagerung
- 26: Futterhülse
- 27: Futterzahnkranz
- 28: Spindelstange
- 29: Spindelstangenzahnkranz
- 30: Federelement
- 31: Mitnehmerring
- 32: Aufnahme
- 33: Mitnehmerinnenverzahnung
- 34: Gehäuseverzahnung
- 35: Futterkörperverzahnung
- 36: Mitnehmeraußenverzahnung

## Patentansprüche

1. Bohrvorrichtung, bestehend aus einer einen Motor aufweisenden Bohrmaschine, die eine in einem Maschinengehäuse (1) drehbar gelagerte Bohrspindel (2) aufweist, und einem Bohrfutter mit einem Futterkörper (3), in dem mittels einer zwischen einem Gewindeglied (4) und einem Gewindegegenglied (5) ausgebildeten Gewindeverbindung (6) verstellbare Spannbacken (7) geführt sind, wobei die Bohrvorrichtung zwischen einer Spannkonfiguration, in welcher das Gewindeglied (4) gegenüber dem Gewindegegenglied (5) verdrehbar ist, und einer Bohrkonfiguration verstellbar ist, wobei eine mit dem Gewindegegenglied (5) drehfest verbundene und mittels des Motors antreibbare Antriebshülse (8) vorgesehen ist, welche der Kraftübertragung des Motors beim Betrieb der Bohrvorrichtung in der Spannkonfiguration und in der Bohrkonfiguration dient, wobei in der Bohrkonfiguration eine Relativdrehung zwischen dem Gewindeglied (4) und dem Gewindegegenglied (5) ausgeschlossen ist, wobei ein vom Motor antreibbares, mindestens ein Planetenrad (12), einen das mindestens eine Planetenrad (12) lagernden Planetenträger sowie ein Hohlrad (13) umfassendes Planetengetriebe (9) vorgesehen ist, **dadurch gekennzeichnet, dass** der Futterkörper (3) als eine den Planetenträger bildendene Futterhülse (26) gebildet ist, und mindestens einen radial innenliegenden Futterzahnkranz (27) aufweist, wobei im Futterkörper (3) axial verstellbar eine durch den Motor antreibbare Spindelstange (28) geführt ist, die von der Spannkonfiguration, in welcher mindestens ein Spindelstangenzahnkranz (29) der Spindelstange (28) in Eingriff mit dem mindestens einen Planetenrad (12) und außer Eingriff mit dem Futterzahnkranz (27) steht, in die Bohrkonfiguration, in welcher der mindestens eine Spindelstangenzahnkranz (29) im Eingriff mit dem Futterzahnkranz (27) und mit dem mindestens einen Planetenrad (12) steht, überführbar ist, und dass die Antriebshülse (8) als das mit dem mindestens einen Planetenrad (12) im Eingriff stehenden Hohlrad (13) gebildet ist.

2. Bohrvorrichtung nach Anspruch 1, **dadurch gekennzeichnet, dass** zwischen der Futterhülse (26) und der Spindelstange (28) ein diese axial abstützendes Federelement (30) angeordnet ist.

3. Bohrvorrichtung nach Anspruch 1 oder 2, **dadurch gekennzeichnet, dass** der Spindelstange (28) ein koaxial angeordneter Mitnehmerring (31) zugeordnet ist.

4. Bohrvorrichtung nach Anspruch 3, **dadurch gekennzeichnet, dass** dem Maschinengehäuse (1) ein die axiale Verstellung der Spindelstange (28) bewirkende Stellhülse (22) zugeordnet ist.

5. Bohrvorrichtung nach Anspruch 4, **dadurch gekennzeichnet, dass** die Stellhülse (22) mindestens ein mit dem Mitnehmerring (31) wechselwirkendes Stellelement (23) aufweist.

6. Bohrvorrichtung nach Anspruch 5, **dadurch gekennzeichnet, dass** zwischen dem Maschinengehäuse (1) und der Stellhülse (22) und/oder dem Stellelement (23) eine Steuerkurve ausgebildet ist.

7. Bohrvorrichtung nach Anspruch 5 oder 6, **dadurch gekennzeichnet, dass** der Mitnehmerring (31) eine Mitnehmerinnerverzahnung (33) und eine Mitnehmeraußenverzahnung (36) aufweist.

8. Bohrvorrichtung nach Anspruch 7, **dadurch gekennzeichnet, dass** das Maschinengehäuse (1) eine Gehäuseverzahnung (34) und der Futterkörper (3) eine Futterkörperverzahnung (35) aufweisen, und dass in der Bohrkonfiguration die Mitnehmerinnenverzahnung (33) in die Futterkörperverzahnung (35) und die Mitnehmeraußenverzahnung (36) in die Gehäuseverzahnung (34) eingreifen.

9. Bohrvorrichtung nach einem der Ansprüche 1 bis 8, **dadurch gekennzeichnet, dass** die Futterhülse (26) zwei der radial innenliegenden Futterzahnkränze (27) aufweist.

10. Bohrvorrichtung nach einem der Ansprüche 1 bis 9, **dadurch gekennzeichnet, dass** die Spindelstange (28) zwei der Spindelstangenzahnkränze (29) aufweist.

11. Bohrvorrichtung nach Anspruch 10, **dadurch gekennzeichnet, dass** ein erster der Spindelstangenzahnkränze (29) als ein im Eingriff mit dem mindestens einen Planetenrad (12) stehendes Sonnenrad (10) des Planetengetriebes (9) gebildet ist, und dass ein zweiter der Spindelstangenzahnkränze (29) in der Bohrkonfiguration im Eingriff mit dem mindestens einen Futterzahnkranz (27) steht.

12. Bohrvorrichtung nach einem der Ansprüche 1 bis 11, **dadurch gekennzeichnet, dass** die Spindelstange (28) eine Aufnahme (32) für ein Antriebswerkzeug aufweist.

## Claims

1. A drilling apparatus consisting of a drill comprising a motor and a drive spindle (2) rotatably mounted in a housing (1), and a chuck with a chuck body (3), in which displaceable jaws (7) are guided by a threaded connection (6) formed between a threaded drive member (4) and a threaded stem element (5), the drilling apparatus being adjustable between a tightening configuration, in which the threaded drive member (4) is rotatable to the threaded stem element (5), and a drilling configuration, whereby a drive sleeve (8) rotationally fixed to the threaded stem element (5) and drivable by the motor is provided, the drive sleeve (8) serves for the power transmission of the motor using the drilling apparatus in the tightening configuration and in the drilling configuration, wherein in the drilling configuration the threaded drive member (4) and the threaded stem element (5) are fixed with respect to rotation, wherein a planetary-gear transmission (9) is provided being driveable by the motor, consisting of at least a planet gear (12), a planet carrier (11) supporting the at least one planet gear (12), and a ring gear (13), **characterized in that** the chuck body (3) is formed as a body sleeve (26) constituting the planet carrier, the body sleeve (26) being formed with at least one crown-gear (27) with a radially inwardly projecting teeth, a spindle rod (28) being axially shiftable and driveable by the motor is guided in the chuck body, the spindle rod (26) being shiftable between a tightening configuration, in which at least a ring of crown-gear teeth (29) on the spindle rod (28) is engaged with the at least one planet gear (12) and not engaged with the crown gear (27), and a drilling configuration, in which the at least one ring of crown-gear teeth (29) is engaged with the crown-gear (27) and the at least one planet gear (12), and **in that** the drive sleeve (8) being designed as the ring gear (13) engaged with the at least one planet gear (12).

2. The drilling apparatus defined in claim 1, **characterized in that** between the body sleeve (26) and the spindle rod (28) a spring element (30) supporting the spindle rod (28) is attributed.

3. The drilling apparatus defined in claim 1 or 2, **characterized in that** coaxial to the drive spindle (28) a driver ring (31) is disposed.

4. The drilling apparatus defined in claim 3, **characterized in that** an adjusting sleeve (22) for axially shifting the spindle rod (28) is disposed to the housing (1).

5. The drilling apparatus defined in claim 4, **characterized in that** the adjusting sleeve (22) comprises at least one adjusting element (23) interacting with the driver ring (31).

6. The drilling apparatus defined in claim 5, **characterized in that** a cam is formed between the housing (1) and the adjusting sleeve (22) and/or the adjusting element (23).

7. The drilling apparatus defined in claim 5 or 6, **characterized in that** the driver ring (31) comprises a ring of internal gear teeth (33) and a ring of external gear teeth (36).

8. The drilling apparatus defined in claim 7, **characterized in that** the housing (1) comprises a housing gear serration (34) and the body (3) comprises a chuck body serration (35), and **in that** in the drilling configuration the ring of internal gear teeth (33) engages the chuck body serration (35) and the ring of external gear teath (36) engages the housing gear serration (34).

9. The drilling apparatus defined in claims 1 to 8. **characterized in that** the body sleeve (26) comprises two radial inward situated chuck crown teeth (27).

10. The drilling apparatus defined in claim 1 to 9, **characterized in that** the spindle rod (28) comprises two rings of crown-gear teeth (29).

11. The drilling apparatus defined in claim 10, **characterized in that** a first one of the rings of crown-gear teeth (29) is designed as a sun gear (10) of the planetary gear transmission (9), the sun gear (10) being engaged to the at least one planet gear (12), and **in that** the second one of the ring of crown-gear teeth (29) in the drilling configuration is engaged with the at least one chuck crown teeth (27).

12. The drilling apparatus defined in claim 1 to 11, **characterized in that** the spindle rod (28) comprises a receptacle (32) for a driver tool.

## Revendications

1. Dispositif de perçage constitué d'une perceuse, présentant un moteur, qui comporte une broche de perçage (2) montée tournante dans un carter de machine (1), et d'un mandrin porte-foret comportant un corps de mandrin (3) dans lequel sont guidés des mors de serrage (7) pouvant être déplacés au moyen d'une liaison filetée (6) réalisée entre un élément fileté (4) et un élément fileté conjugué (5), le dispositif de perçage pouvant être déplacé entre une configuration de serrage, dans laquelle l'élément fileté (4) peut être tourné par rapport à l'élément fileté conjugué (5), et une configuration de perçage, sachant qu'il est prévu une douille d'entraînement (8) qui est solidaire en rotation de l'élément fileté conjugué (5) et peut être entraînée par le moteur et qui sert à la transmission de force du moteur lors du fonctionnement du dispositif de perçage dans la configuration de serrage et dans la configuration de perçage, sachant que dans la configuration de perçage, une rotation relative entre l'élément fileté (4) et l'élément fileté conjugué (5) est exclue, sachant qu'il est prévu un engrenage planétaire (9) pouvant être entraîné par le moteur et comprenant au moins un satellite (12), un porte-satellites portant le satellite (12), au nombre d'au moins un, ainsi qu'une couronne (13), **caractérisé en ce que** le corps de mandrin (3) est réalisé comme douille de mandrin (26) formant le porte-satellites et présente au moins une couronne dentée de mandrin (27) située radicalement à l'intérieur, sachant qu'une tige de vis (28), pouvant être entraînée par le moteur, est guidée avec possibilité de déplacement axial dans le corps de mandrin (3), tige qui peut être déplacée de la configuration de serrage, dans laquelle au moins une couronne dentée de tige de vis (29) de la tige de vis (28) est en prise avec le satellite (12), au nombre d'au moins un, et hors de prise d'avec la couronne dentée de mandrin (27), dans la configuration de perçage dans laquelle la couronne dentée de tige de vis (29), au nombre d'au moins une, est en prise avec la couronne dentée de mandrin (27) et avec le satellite (12), au nombre d'au moins un, et **en ce que** la douille d'entraînement (8) est réalisée en tant que couronne (13) en prise avec le satellite (12), au nombre d'au moins un.

2. Dispositif de perçage selon la revendication 1, **caractérisé en ce qu'**il est prévu, entre la douille de mandrin (26) et la tige de vis (28), un élément à ressort (30) fournissant un appui axial à celle-ci.

3. Dispositif de perçage selon la revendication 1 ou 2, **caractérisé en ce qu'**une bague d'entraînement (31), disposée de façon coaxiale, est associée à la tige de vis (28).

4. Dispositif de perçage selon la revendication 3, **caractérisé en ce qu'**une douille d'actionnement (22), provoquant le déplacement axial de la tige de vis (28), est associée au carter de machine (1).

5. Dispositif de perçage selon la revendication 4, **caractérisé en ce que** la douille de réglage (22) présente au moins un élément d'actionnement (23) qui est en interaction avec la bague d'entraînement (31).

6. Dispositif de perçage selon la revendication 5, **caractérisé en ce qu'**une came est réalisée entre le carter de machine (1) et la douille d'actionnement (22) et/ou l'élément d'actionnement (23).

7. Dispositif de perçage selon la revendication 5 ou 6, **caractérisé en ce que** la bague d'entraînement (31) présente une denture d'entraînement intérieure (33) et une denture d'entraînement extérieure (36).

8. Dispositif de perçage selon la revendication 7, **caractérisé en ce que** le carter de machine (1) présente une denture de carter (34) et le corps de mandrin (3) une denture de corps de mandrin (35), et **en ce que** dans la configuration de perçage, la denture d'entraînement intérieure (33) engrène avec la denture de corps de mandrin (35) et la denture d'entraînement extérieure (36) engrène avec la denture de carter (34).

9. Dispositif de perçage selon l'une des revendications 1 à 8, **caractérisé en ce que** la douille de mandrin (26) présente deux des couronnes dentées de mandrin (27) situées radialement à l'intérieur.

10. Dispositif de perçage selon l'une des revendications 1 à 9, **caractérisé en ce que** la tige de vis (28) présente deux des couronnes dentées de tige de vis (29).

11. Dispositif de perçage selon la revendication 10, **caractérisé en ce qu'**une première des couronnes dentées de tige de vis (29) est réalisée sous la forme d'un solaire (10) de l'engrenage planétaire (9), qui est en prise avec le satellite (12), au nombre d'au moins un, et **en ce que** dans la configuration de perçage, une deuxième des couronnes dentées de tige de vis (29) est en prise avec la couronne dentée de mandrin (27), au nombre d'au moins une.

12. Dispositif de perçage selon l'une des revendications 1 à 11, **caractérisé en ce que** la tige de vis (28) présente un logement (32) pour un outil d'entraînement.
